# EUROPEAN PATENT APPLICATION

(11) **EP 4 664 856 A1**
(43) Date of publication of application: **17.12.2025**
(21) Application number: 24181838.4
(22) Date of filing: 12.06.2024
(51) Int. Cl.: H04L 67/12

(54) **A DATA EXCHANGE SYSTEM INCLUDING A MICROSERVICE CLIENT AGGREGATOR**

(71) Applicant: ABB SCHWEIZ AG, 5400 Baden (CH)
(72) Inventor: HANSSON, Felix, 725 97 Västerås (SE); FRANTZ, Anders, 722 45 Västerås (SE); GJERSETH, Jan, 722 12 Västerås (SE)
(74) Representative: Kransell & Wennborg KB

(57) **Abstract**

The present invention generally relates to a data exchange system (100) for a distributed control system, the data exchange system comprising: a first layer (102) including a set of microservice clients (104a,b), a second layer (106) comprising at least one microservice client aggregator (108) configured to aggregate common stateful connections (109a,b) and/or common subscriptions (111a,b) from the microservice clients, and a third layer (110) comprising at least one server (112), at least one microservice client aggregator (108) in the second layer is configured to be in communication with at least one server in the third layer, wherein, at least one microservice client aggregator is/are configured to provide, to at least one server (112), aggregated common stateful connections (109) and/or aggregated common subscriptions (111) that are associated with more than one microservice client, and to provide collected data (114) to the microservice clients according to the aggregated common stateful connections (109) and/or aggregated common subscriptions (111).

## Description

### Field of the Invention

The present invention generally relates to a data exchange system for a distributed control system, a microservice client aggregator, a computer program, and to a computer-implemented method for the microservice client aggregator.

### Background

In modern distributed control systems (DCS), microservice architectures are commonly employed due to their scalability and flexibility. These architectures often involve numerous small applications that communicate with each other, typically over different network protocols. One widely used protocol in DCS is OPC UA (Open Platform Communications Unified Architecture), which facilitates data exchange between various applications.

However, when numerous OPC UA clients simultaneously access the same data from an OPC UA server, it can lead to significant load and performance issues on the server, especially in microservice architectures, where a high number of microservices may frequently interact with the OPC UA servers and there are typically multiple microservice clients to a microservice. This scalability issue necessitates a solution that can efficiently handle multiple client sessions without overloading the OPC UA servers and provide improved or at least more reliable data exchange in distributed control systems.

### Summary

In view of the above-mentioned and other drawbacks of the prior art, it is an object of the present invention to provide a data exchange system and microservice client aggregator component that at least partly alleviates the drawbacks of prior art.

According to a first aspect of the invention, there is provided a data exchange system for a distributed control system, the data exchange system comprising: a first layer including a set of microservice clients, a second layer comprising at least one microservice client aggregator configured to aggregate common stateful connections and/or common subscriptions from the microservice clients, and a third layer comprising at least one server, at least one microservice client aggregator in the second layer is configured to be in communication with at least one server in the third layer, wherein, at least one microservice client aggregator are configured to provide, to at least one server, aggregated common stateful connections and/or aggregated common subscriptions that are associated with more than one microservice client, and to provide the collected data to the microservice clients according to the aggregated common stateful connections and/or aggregated common subscriptions.

The present invention is at least partly based on the realization to create a microservice client aggregator that can collect or aggregate the stateful connections and/or subscriptions that are common to more than one microservice client. A common stateful connection and/or common subscription is a stateful connection and/or subscription that more than one microservice client uses. That is, if two microservice clients are using the same subscription, that subscription is common to the two microservice clients. Instead of having the microservices that share the same stateful connections and/or subscription communicate independently with the servers, the microservice client aggregator aggregates the communication and sends fewer requests to the servers, for example a single request for multiple microservice clients that have a common stateful connection and/or a common subscription, thereby reducing the load on the server.

A stateful connection is one in which some information about a connection between two clients is retained for future use. The connection may remain open even though the two clients or microservices or servers are not transmitting data, that is the connection itself retains the state.

When the term stateful connection is used, it may include both a physical connection and sessions. Generally, and as know to a skilled person, a connection is physical communication channel and a session is a state of information exchange. A connection may have multiple sessions.

A subscription herein refers to a mechanism by which a microservice client or microservice client aggregator registers interest in receiving specific data updates from a server.

The microservice client or aggregator specifies the data within the server that it is interested in. These items can include variables, events, or any other data types supported by the server. Once the subscription is established, the server maintains communication with the subscribing client to send updates to the subscriber based on the changes in the subscribed data items. The updates may be sent on-demand or periodically.

In the present invention, the microservice client aggregator consolidates multiple subscriptions from various microservice clients. This aggregation reduces the number of individual connections and subscriptions that the server must handle, thereby improving scalability and performance, and reducing load on the servers.

The data exchange system may comprise a set of more than one microservice client aggregators and more than one server.

The present invention allows for seamlessly maintaining sessions with reconnections and recreation transferring monitored items from one session to another. For example, if a server malfunctions, the microservice client aggregator may connect to another server and seamlessly maintain the connection to the microservice client.

The present invention allows for multiple user sessions per communication channel. That is, a single connection to the server from a microservice client aggregator can serve more than one user in the first layer.

The present invention further allows for a single shared anonymous session to maintain connection state as a microservice. This microservice provides for e.g., connecting to a server using a session that is not related to a client in the first layer and notifying users in the first layer if a server in the third layer has been compromised.

In one embodiment, the microservice client aggregators may be configured to communicate with the servers using OPC UA. Further, the servers may be OPC UA servers. Advantageously, OPC UA supports the scalability of a microservice architecture. Using OPC UA ensures seamless communication between microservice client aggregators and servers. This enhances interoperability across different devices and systems within the distributed control system.

In one embodiment, at least one microservice client aggregator is configured to provide common stateful connections and/or common subscriptions to more than one server. By distributing the load and avoiding server bottlenecks, the overall performance of the data exchange system is enhanced. The system can handle more clients and higher data throughput, maintaining high performance levels even under heavy load conditions. Furthermore, distributing connections and subscriptions across several servers can reduce latency.

In one embodiment, at least one microservice client aggregator may be hosted inside a microservice. In this case the microservice client aggregator aggregates common stateful connections and/or aggregated common subscriptions of microservice clients of the microservice.

In one embodiment, at least one microservice client aggregator is configured as a standalone microservice. In this case, the clients of the microservice client aggregator are microservices with its own clients. This enhances the scalability of the data exchange system even further since common stateful connections and/or aggregated common subscriptions of microservice clients of more than one arbitrary microservice is aggregated by the microservice client aggregator.

In one embodiment, the clients of the microservice client aggregator may itself be a microservice client aggregator.

In one embodiment, at least one of the microservice client aggregators may be comprised in a separate container.

Containers may be managed by an external service or an orchestrator (e.g., Kubernetes, Docker Swarm, etc.) which will improve availability of the individual core service of the micro-frontend applications and allow better load balancing.

A container is a standalone, executable package of software that includes everything needed to run an application: code, runtime, system tools, system libraries and settings.

Example containers include e.g., Docker, Podman, and ContainerD.

The microservice client aggregator may be a container as part of a POD with other microservice-containers or as a stand-alone POD.

In one embodiment, the microservice clients may be comprised in separate containers. Containers encapsulate the dependencies and configurations required by the microservice client aggregators, making deployment and management simpler. Process isolation may also provide improved security against breaches.

In one embodiment, the microservice client aggregators may be configured to dynamically connect and/or disconnect to the servers based on their present states. This allows for load balancing depending on the server's availability and/or servers failures.

In one embodiment, at least the second layer may be a container environment.

In one embodiment, the microservice clients may be browsers on computing devices. Browsers provide a simple and established implementation environment that is robust. The browser may use http or https protocol for data exchange.

In one embodiment, the microservice clients may display one or more of process graphics, an alarm status, and a data trend.

There is further provided a distributed control system comprising a set of data input devices and a data exchange system.

According to a second aspect of the present invention, there is provided a computer program product comprising a computer readable medium having stored thereon computer program means for implementing the data exchange system.

The computer readable medium may be a non-transitory computer-readable storage medium.

Further effects and features of the second aspect of the invention are largely analogous to those described above in connection with the first aspect of the invention.

According to a third aspect of the invention, there is provided a microservice client aggregator component in communication with more than one microservice client and with at least one server, wherein the microservice client aggregator component is configured to: aggregate common stateful connections and/or common subscriptions from microservice clients, and to provide, to the servers, aggregated common stateful connections and/or aggregated common subscriptions that are associated with more than one microservice client, and to provide the collected data to the microservice clients according to the aggregated common stateful connections and/or aggregated common subscriptions.

Further effects and features of the third aspect of the invention are largely analogous to those described above in connection with the first aspect and the second aspect of the invention.

According to a fourth aspect of the invention, there is provided a computer-implemented method comprising: receiving, by a microservice client aggregator component in a data exchange system for a distributed control system, stateful connections and/or subscriptions from microservice clients, aggregating, by the microservice client aggregator component, stateful connections and/or subscriptions to form aggregated stateful connections and/or aggregated subscriptions, providing, by the microservice client aggregator component, the aggregated common stateful connections and/or aggregated common subscriptions that are associated with more than one microservice client to servers, and providing, by the microservice client aggregator component, the collected data to the microservice clients according to the aggregated common stateful connections and/or aggregated common subscriptions.

Further effects and features of the fourth aspect of the invention are largely analogous to those described above in connection with the first aspect, the second aspect, and the third aspect of the invention.

Further features of, and advantages with, the present invention will become apparent when studying the appended claims and the following description. The skilled person will realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 illustrates a data exchange system for a distributed control system according to embodiments of the present invention;
Fig. 2 illustrates a data exchange system for a distributed control system according to embodiments of the present invention;
Fig. 3 illustrates a data exchange system for a distributed control system according to embodiments of the present invention;
Fig. 4 illustrates a data exchange system for a distributed control system according to embodiments of the present invention;
Fig. 5 illustrates a distributed control system according to embodiments of the present invention; and
Fig. 6 is a flow-chart of method steps according to embodiments of the present invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

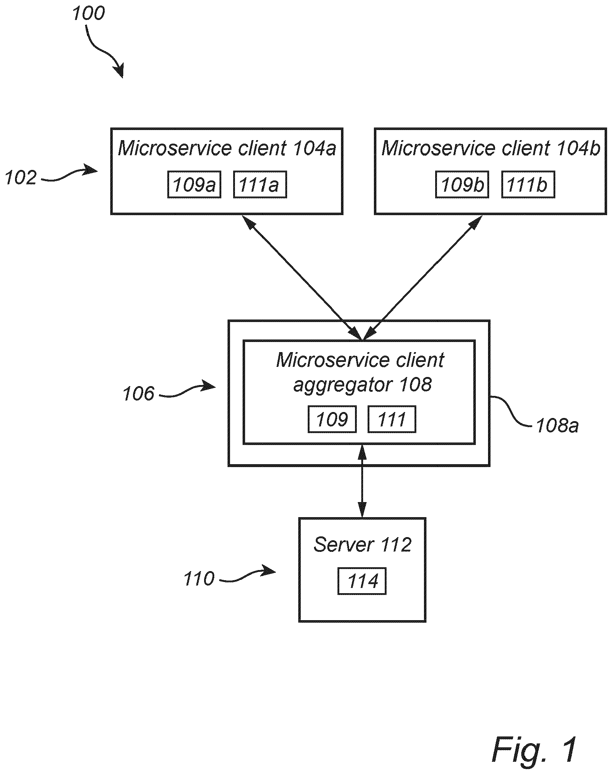

Fig. 1 illustrates a data exchange system 100 for a distributed control system. The data exchange system 100 comprises a first layer 102 including a set of microservice clients 104a,b.

A microservice client 104a,b is employed in a microservice architecture in a distributed control system.

The data exchange system 100 further comprises a second layer 106. The second layer 106 comprises at least one microservice client aggregator 108 configured to aggregate common stateful connections 109a,b and/or common subscriptions 111a,b from the microservice clients 104a,b. The microservice client aggregator 108 is hosted in a microservice 108a. The microservice 108a is either a standalone microservice or as part of another m icroservice.

The data exchange system 100 further comprises a third layer 110 comprising at least one server 112 configured to be in communication with the at least one microservice client aggregator 108 in the second layer 106. Although different communication protocols are envisaged, in one embodiment the at least one microservice client aggregator is/are configured to communicate with the servers using so called OPC Unified Architecture, OPC UA. The at least one server 112 may thus be at least one OPC UA server 112.

The at least one microservice client aggregator 108 is/are configured to provide, to the at least one server 112, aggregated common stateful connections 109 and/or aggregated common subscriptions 111 that are associated with more than one microservice client 104a,b, and to provide collected data 114 to the microservice clients 104a,b according to the aggregated common stateful connections 109 and/or aggregated common subscriptions 111.

In other words, the microservice clients 104a,b are configured to request data and establish a connection or communication channel with a server 112. The server 112 stores data 114 that may be requested by the microservice clients 104a,b in the first layer. The subscriptions 111a-b specifies the data that the microservice client 104a,b requests, on a one-time basis, but more likely on a frequent basis such as with some preset interval or frequency. The data is transmitted through the stateful connection established by the microservice client 104a,b. In order to reduce the load on the server 112, a microservice client aggregator 108, which may itself be a microservice, is introduced as an intermediate layer 106 between the at least one server 112 and the microservice clients 104a,b in the first layer 102.

The microservice client aggregator 108 collects the subscriptions 111a,b and stateful connections 109a,b that are the same for more than one microservice client 104a,b, accumulates and provides them as a single, common, stateful connection 109 and/or single, common subscription 111 to the server 112. In this schematic example, the server only has to communicate with one entity, the microservice client aggregator component 108, instead of directly with two separate microservice clients 104a,b. That is, the subscription 111 is identical to the subscriptions 111a,b and the stateful connection 109 is identical to the stateful connections 109a,b. However, the microservice client aggregator 108 uses microservice client 104a,b identification to keep track of which microservice client 104a,b is associated with the aggregated common stateful connections 109 and/or aggregated common subscriptions 111.

It is envisaged that a microservice client 104 may in itself be a microservice that includes backend microservices.

The microservice client aggregator 108 identifies shareable connections and subscriptions between its clients 104 based on some conditions. On example condition may be "End User". As an example, user A opens a client 104a, in the below this may be client X and another client 104b, in the below this may be client Y. Without the aggregator 108 two sessions would be created down to the OPC UA server 112, below referred to as ServerA. However, the herein proposed the microservice client aggregator 108 is configured to internally keep track of server connection and clients, for example using a look-up table of server connection and clients.

The entries of such look-up table may be:
<SessionToServerA, User A, [Client X, Client Y]>.

Furthermore, when a user A from Client 104a subscribed to item 1,2,3 subscriptions will be created towards ServerA 112 accordingly:
<ServerA, Item1 : User A, [Client X]>
<ServerA, Item2 : User A, [Client X]>
<ServerA, Item3 : User A, [Client X]>

Now if User A subscribes to Item 3,4 from Client 104b the table will extend accordingly;
<ServerA, Item1 : User A, [Client X]>
<ServerA, Item2 : User A, [Client X]>
<ServerA, Item3 : User A, [Client X, Client Y]>
<ServerA, Item4 : User A, [Client Y]>.

In addition, the microservice client aggregator 108 may identify the correct server through a through a lookup table.
Item 1: ServerA
Item2: ServerA
ltem43:ServerB
etc.

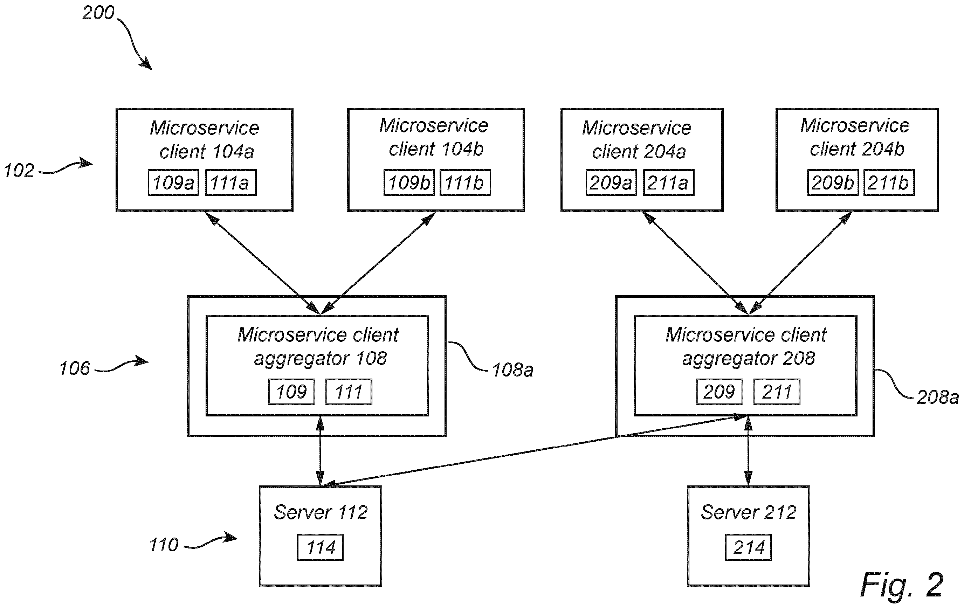

Fig. 2 illustrates a data exchange system 200 with multiple microservice client aggregators 108, 208, multiple servers 112, 212. Furthermore, in this example, further microservice clients 204 that have common stateful connections 209a,b and/or common subscriptions 211a,b.

In addition to the microservice client aggregator 108 described with reference to fig 1, the system 200 comprises an additional microservice client aggregator 208 that is configured to provide, to the at least one server 112, 212, aggregated common stateful connections 209 and/or aggregated common subscriptions 211 that are associated with more than one microservice client 204a,b, and to provide collected data 114, 214 to the microservice clients 204a,b according to the aggregated common stateful connections 209 and/or aggregated common subscriptions 211.

In addition, the microservice client aggregator 208 hosted in the microservice 208a is configured to provide common stateful connections 211 and/or common subscriptions 209 to more than one server 112, 212. That is, the microservice client aggregator 208 is able to extract data from more than one server 112, 212 based on the requests from the microservice clients 204a, b.

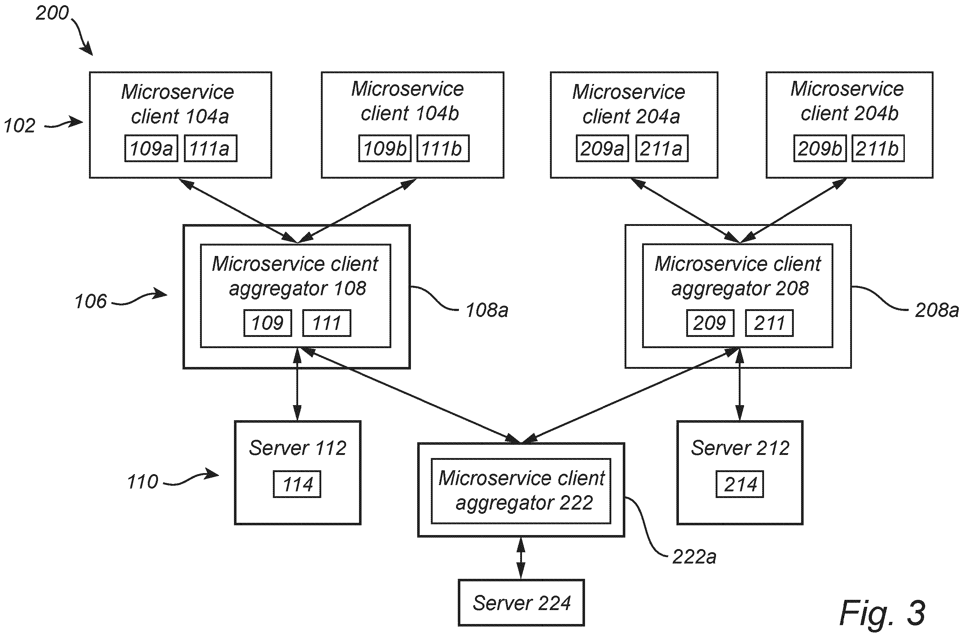

Turning to fig. 3. It may be possible to have multiple layers of microservice client aggregators 108, 208, 222 to provide further reduced load on the servers. In this case, the microservice client aggregators 108, 208, 222 are configured as stand-alone microservices 108a, 208a, 222a. The clients of the microservice client aggregator 222 are the microservice aggregators 108 and 208. The microservice client aggregator 222 is configured to communicate with the server 224 using so called OPC Unified Architecture.

As a further example, microservice client 104a and microservice client 104b could themselves be hosted in arbitrary microservices, and microservice client aggregator 108 may then be arranged to aggregate common stateful connections and/or common subscriptions received from further microservice clients which acts as clients to the microservices in the first layer 102.

The microservice client aggregators 108, 208 may be configured to dynamically connect and/or disconnect to at least one server 112, 212 based on their present states. That is, the microservice client aggregators may monitor the status of the servers and disconnect from one server 212 and connect to another server 112 to achieve better load balancing between servers or enable data availability due to server fault or maintenance.

The microservice clients may be implemented in different ways, but one preferred embodiment is that the microservice clients are browsers on computing devices, such as computers. The microservice clients may display one or more of process graphics, an alarm status, and a data trend. The data that is displayed is from the processes of the distributed control system where the data exchange system 100, 200 is deployed.

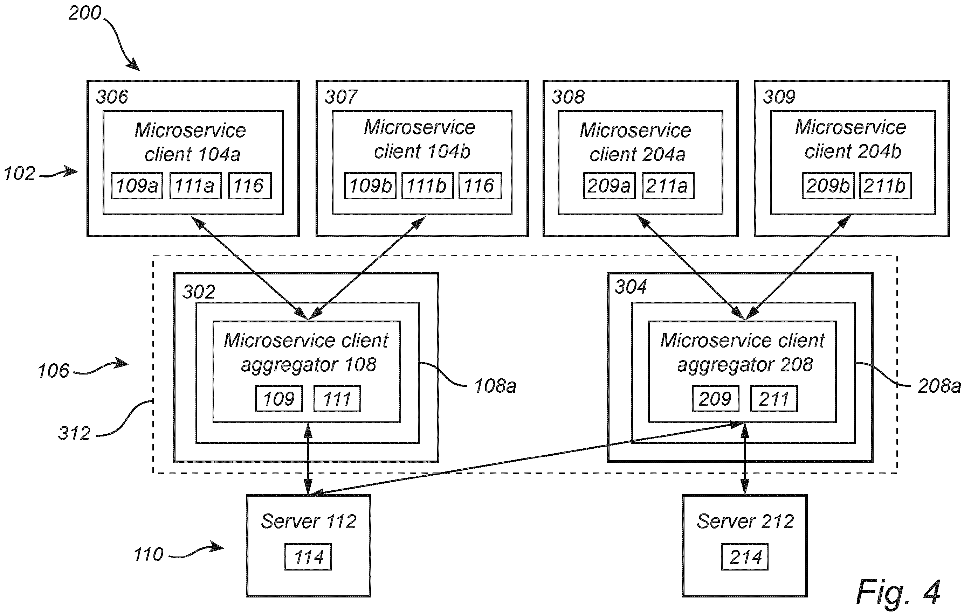

Fig. 4 illustrates the data exchange system 200 where the second layer 106 is a container environment. The microservice client aggregators 108 and 208 are comprised in separate containers 302, 304. That is, the microservice client aggregator 108 is deployed in a first container 302 and the microservice client aggregator 208 is deployed in a second container 304. This advantageously provides for forming a cluster 312 such as a Kubernetes cluster where additional containers can be created to provide other functionalities. For example, a server may be included in the cluster.

Furthermore, optionally, also the microservice clients 204a,b are comprised in separate containers 306, 307, 308, 309. That is, each microservice client 104, 204 are deployed in separate containers 306, 307, 308, 309 that holds a single microservice client.

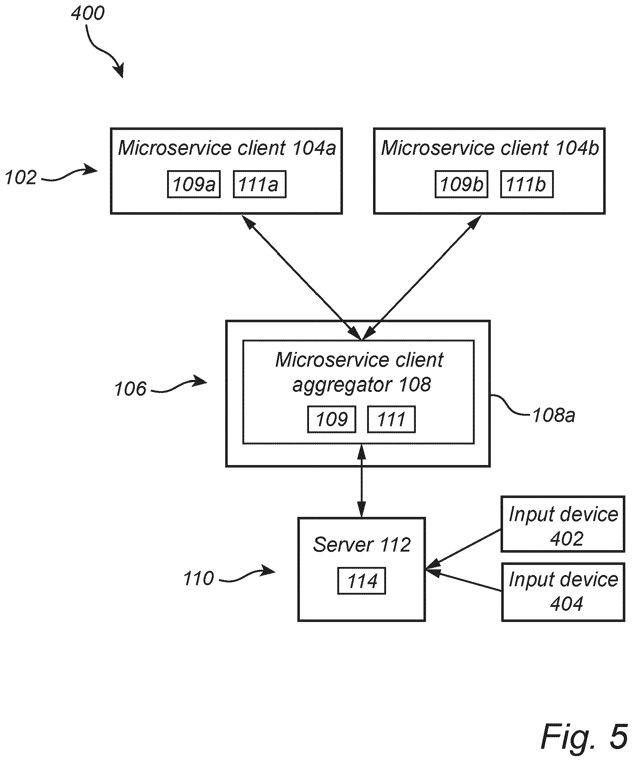

Fig. 5 schematically illustrates a distributed control system 400 according to embodiments of the invention. The distributed control system 400 comprises a set of data input devices 402 and 404 that are configured to collect data from different parts of a process plant. The input devices 402 and 404 may collect data for a process graphics or alarm readings or data for generating a data trend for a microservice client 104a,b. The data 114 is stored in or accessed through the server 114. The microservice clients 104 can access the data through their subscriptions 109a,b and stateful connections 111a,b via the microservice client aggregator component 108 of the herein disclosed data exchange system 100, 200. The data collected by the input devices may be for example be temperature data, or other data related to the process in a process plant. The data may either be measured directly or calculated based on measured data.

There is further herein provided a microservice client aggregator component 108, 208 in communication with more than one microservice client 104, 204 and with at least one server 112, 212. The microservice client aggregator component 108, 208 is configured to: aggregate common stateful connections 109a,109b and/or common subscriptions 111a, 111b from microservice clients 104a,b, 204a,b, and to provide, to the servers 112, 212, aggregated common stateful connections 109, 209 and/or aggregated common subscriptions 111, 211 that are associated with more than one microservice client 104a,b, 204a,b, and to provide collected data 114, 214 to the microservice clients 104a,b, 204a,b according to the aggregated common stateful connections 109, 209 and/or the aggregated common subscriptions 111, 211.

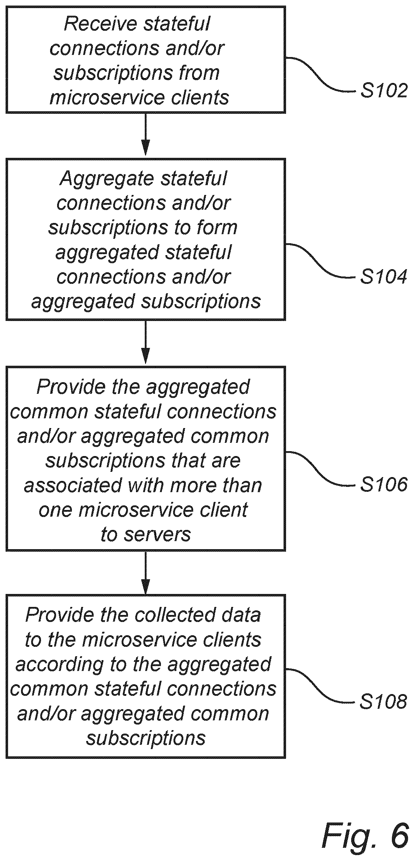

Fig. 6 is a flow-chart of a computer-implemented method according to embodiment of the present invention.

In step S102 receiving, by a microservice client aggregator component 108 in a data exchange system 100 for a distributed control system, stateful connections 109a,b and/or subscriptions 111a,b from microservice clients 104a,b.

In step S104 aggregating, by the microservice client aggregator component 108, stateful connections and/or subscriptions to form aggregated stateful connections 109 and/or aggregated subscriptions 111.

In step S106, providing, by the microservice client aggregator component 108, the aggregated common stateful connections 109 and/or aggregated common subscriptions 111 that are associated with more than one microservice client 104a, b to server 112.

In step S108, providing, by the microservice client aggregator component 108, the collected data 114 to the microservice clients 104a,b according to the aggregated common stateful connections 109 and/or aggregated common subscriptions 111.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A data exchange system (100) for a distributed control system, the data exchange system comprising:
a first layer (102) including a set of microservice clients (104a,b),
a second layer (106) comprising at least one microservice client aggregator (108) configured to aggregate common stateful connections (109a,b) and/or common subscriptions (111a,b) from the microservice clients, and
a third layer (110) comprising at least one server (112), at least one microservice client aggregator (108) in the second layer is configured to be in communication with at least one server in the third layer, wherein,
at least one microservice client aggregator is/are configured to provide, to at least one server (112), aggregated common stateful connections (109) and/or aggregated common subscriptions (111) that are associated with more than one microservice client, and to provide collected data (114) to the microservice clients according to the aggregated common stateful connections (109) and/or aggregated common subscriptions (111).

2. The data exchange system according to claim 1, wherein the at least one microservice client aggregator is/are configured to communicate with the servers using OPC UA.

3. The data exchange system according to any one of claims 1 and 2, wherein at least one microservice client aggregator is configured to provide common stateful connections and/or common subscriptions to more than one server (112, 212).

4. The data exchange system according to any one of claims 1-3, wherein at least one microservice client aggregator is hosted in a microservice, or is configured as a stand alone microservice.

5. The data exchange system according to claim 4, wherein clients of the microservice client aggregator may itself be a microservice client aggregator.

6. The data exchange system according to any one of claims 1-5, wherein at least one of the microservice client aggregators is comprised in a separate container (302, 304).

7. The data exchange system according to any one of claims 1-6, wherein the microservice clients are comprised in separate containers (306-309).

8. The data exchange system according to any one of claims 1-7, wherein the microservice client aggregators are configured to dynamically connect and/or disconnect to the at least one server based on their present states.

9. The data exchange system according to any one of claims 1-8, wherein at least the second layer is a container environment.

10. The data exchange system according to any one of claims 1-9, wherein the microservice clients are browsers on computing devices.

11. The data exchange system according to any one of claims 1-10, wherein the microservice clients display one or more of process graphics, an alarm status, and a data trend.

12. A distributed control system comprising a set of data input devices and a data exchange system according to any one of claims 1-12.

13. A computer program product comprising a computer readable medium having stored thereon computer program means for implementing the data exchange system according to any one of the preceding claims.

14. A microservice client aggregator component in communication with more than one microservice client and with at least one server, wherein the microservice client aggregator component is configured to:
aggregate common stateful connections and/or common subscriptions from microservice clients, and to
provide, to the servers, aggregated common stateful connections and/or aggregated common subscriptions that are associated with more than one microservice client, and to provide the collected data to the microservice clients according to the aggregated common stateful connections and/or aggregated common subscriptions.

15. A computer-implemented method comprising:
receiving (S102), by a microservice client aggregator component in a data exchange system for a distributed control system, stateful connections and/or subscriptions from microservice clients,
aggregating (S104), by the microservice client aggregator component, stateful connections and/or subscriptions to form aggregated stateful connections and/or aggregated subscriptions,
providing (S106), by the microservice client aggregator component, the aggregated common stateful connections and/or aggregated common subscriptions that are associated with more than one microservice client to servers, and
providing (S108), by the microservice client aggregator component, the collected data to the microservice clients according to the aggregated common stateful connections and/or aggregated common subscriptions.
